# EUROPEAN PATENT SPECIFICATION

(11) **EP 0 648 187 B1**
(45) Date of publication and mention of the grant of the patent: **24.05.2000**
(21) Application number: 93901064.1
(22) Date of filing: 22.12.1992
(51) Int. Cl.: B66C 1/02, F16B 47/00, B25B 11/00, B25H 1/00

(54) **CLAMPING DEVICE**
BEFESTIGUNGSVORRICHTUNG
DISPOSITIF DE FIXATION

(30) Priority: 26.06.1992 AU PL316792; 10.08.1992 US 927588; 25.11.1992 AU PL600192
(43) Date of publication of application: 19.04.1995
(73) Proprietor: RANKIN, Noel William George, Bayswater, VIC 3153 (AU)
(72) Inventor: RANKIN, Noel William George, Bayswater, VIC 3153 (AU)
(74) Representative: Chaillot, Geneviève
(86) International application number: AU9200679
(87) International publication number: WO9400374

(56) References cited:
- AU-A- 2 928 067
- DE-B- 1 046 443
- FR-A- 1 138 249
- FR-A- 2 028 135
- US-A- 2 730 370
- US-A- 2 852 264
- US-A- 2 853 333
- US-A- 2 955 829
- US-A- 3 266 102
- US-A- 3 640 562
- Derwent Soviet Inventions Illustrated, Section III, Mechanical & General, issued February 1965, General Engineering, p. 6; & SU,A,163736 (LEVIN) December 1964 (00.12.64), Abstract and Figure.
- Derwent Soviet Inventions Illustrated, Section III, Mechanical & General, issued May 1969, Building, Mining, Mechanical Handling, p. 4; & SU,A,219145 (TARASOV et al.) March 1969 (00.03.69).
- DERWENT ABSTRACT Accession No. J5310B/40, Class Q38; & SU,A,640952 (KONOVALOV) 10 January 1979 (10.01.79), Abstract and Figure.

## Description

### FIELD OF THE INVENTION:

This invention relates to a clamping device and in particular to a clamping device for temporarily attaching a tool to a surface of an article.

The clamping device to which the invention relates is of the type which comprises a base plate having a lower surface; a groove formed in the lower surface and extending around the periphery of the base plate, the groove being defined by a bottom face, an inwardly facing side face and an outwardly facing side face, the side faces each extending from the bottom face to the lower surface of the base plate; a compressible seal having side faces located in the groove and protruding externally therefrom, the lower surface and compressible seal defining a vacuum chamber together with the article surface when the base plate is pressed toward the article surface in use of the clamping device said compressible seal being dimensioned relative to the groove so that, and when sealing the article surface, the seal deforms laterally within the groove; and a means to supply a vacuum to the vacuum chamber.

### BACKGROUND OF THE INVENTION:

Suction pads and similar devices are known for grasping articles, for example, to transport an article from one position to another. They are also used for such purposes as attaching a tool to a workpiece. Suction pads tend to gradually lose their "vacuum" and become detached from the article to be grasped or the workpiece. It is possible to overcome this problem by providing continuous suction to a variant of a suction pad.

United States patent 2730370 discloses a clamping device for holding workpieces which are to be subjected to various machining operations or other treatment. The device includes a vacuum body providing a vacuum chamber having a lower surface. A compressible sealing ring is located in a relatively enlarged cross-sectional groove formed in the lower surface. In use of the device, the sealing ring seals against a surface of the workpiece. A passageway in the body serves to exhaust air from the vacuum chamber so as to create a vacuum in the chamber and thereby hold the body against the workpiece. The sealing ring deforms laterally within the groove when sealing against the workpiece.

Australian patent 274586 Woodfield Bennett Limited discloses a pick up head comprising a back plate provided with a soft rubber seal positioned on the underneath of the plate.

Australian patent 29280/67 Vacu-Lift Maschinenbau GmbH also discloses an annular sealing ring, which in this case has a support. The annular sealing ring surrounds a vacuum chamber.

Australian patent 71603/74 "Othene" International Handelmaatschappij BV discloses a suction cup construction comprising a vacuum chamber having an elastic sealing strip affixed to the periphery of the bottom of the vacuum chamber.

In each of these prior patents, the sealing ring readily deforms to assist in sealing against the workpiece.

It is an object of the present invention to provide clamping device having improved vacuum sealing capabilities and stability for tools attached thereto.

In this specification, the word "vacuum" is used in a relatively loose sense to indicate a low pressure relative to atmospheric pressure such that a clamping device according to the invention will be held to an article to be grasped and/or lifted or clamped to a workpiece.

### BRIEF SUMMARY OF THE INVENTION:

The present invention provides a clamping device of the above type and characterised in that the lateral deformation of the seal within the groove is such that the seal engages against both the side faces, and also deforms laterally externally of the groove to engage against the lower surface immediately adjacent the groove, deformation of the seal improving its airtight qualities and restricting the seal against inward and outward lateral movement relative to the base plate thereby stabilising the base plate on the article.

### BRIEF DESCRIPTION OF THE DRAWINGS:

The drawings illustrate one embodiment of the invention by way of example in which:
Figure 1 is a perspective view of an assembly as defined above;
Figure 1A is a detail in cross-section of a seal forming part of the clamping device according to the invention;
Figure 1B is a detail of the seal of Figure 1A, the clamping device being in use;
Figure 2 is a cross-sectional view of a clamping device according to the invention;
Figure 3 is a plan view of a lower portion of the assembly of Figure 1;
Figure 3A is a cross-sectional view of internal mechanism of the assembly taken along line A---A in Figure 3;
Figure 4 is a plan view from the bottom of the lower portion of the assembly shown in Figure 3; and
Figure 5 is a perspective view of a lifting tool according to the invention.

DETAILED DESCRIPTION OF THE INVENTION: Although the lower surface of the vacuum body (as seen in use) is preferably substantially flat to enable the body to adhere to an article or workpiece with a corresponding relatively flat surface, it is possible to have a curved vacuum body so that the body may adhere to an article or workpiece with a correspondingly curved surface. Furthermore the body may be provided with a degree of flexibility such that it may be flexed and/or manipulated to adhere to a curved or relatively irregular surface.

The lower surface of the vacuum body may be provided with at least one and preferably a pattern of internal protrusions elevated to a relatively slight degree from the lower surface wherein in use the size of the vacuum chamber and the degree of vacuum produced may be selected. In this way the adherence of the clamping device to the surface or article to be clamped or grasped may be improved. In addition a peripheral protrusion may also be provided, located outside the line of the seal, and acting to stabilise the operation of the vacuum body by avoiding unwanted rotation of the vacuum body toward or away from the surface or article, particularly when an attached tool such as a drill commences operation on the surface or article. This peripheral protrusion may completely surround the lower surface of the vacuum body, in which case the internal protrusions may not be necessary. Alternatively, it may be provided in a peripheral portion or portions, for example, located under that part of the vacuum body remote from an attached tool.

The compressible seal is preferably constructed principally from a compressible, flexible material made from a polymeric material, such as a natural rubber or an artificial rubber. As stated previously, it is preferable that the compressible seal be located in a groove which is so dimensioned that the seal, when under compression, will expand to fill any free space in the groove, thus providing stability and air-tightness. In addition, the seal preferably can at least partly move from outside to the inside of the groove assists in conforming the seal to roughnesses on the surface. The groove is, for example, of square or rectangular cross-section with a substantially flat bottom. The seal may be adhered to the bottom of the groove or the groove may be so shaped that it clamps the end of the seal. Of course, the groove may have a curved bottom and the seal may be adhered to that bottom.

The source of vacuum may be any suitable pump or other device designed to evacuate air. Thus, the source of vacuum may be separate from the clamping device according to the invention, for example, it may be a suction pump mounted separately. Alternatively, the vacuum chamber may be mounted in a housing attached to the clamping device and a means to evacuate air may be in turn mounted in that housing. Thus, the device to evacuate air may be a venturi pump in which a flow of air through a venturi tube is used to suck air through an offset evacuating tube leading to the vacuum chamber. In this embodiment a two-way valve may be included; thus, in a first position of the valve, air is evacuated from the vacuum chamber as described and, in a second position of the valve, air is directed to the vacuum chamber to overcome the vacuum and release the device from the article or workpiece. Furthermore, a check valve may be provided wherein, in a first operative position of the check valve, a flow of air is allowed to pass to the atmosphere and, in a second operative position, where an external source of vacuum is used, entry of air into the housing and thence to the vacuum chamber is prevented.

In the embodiment of the invention just described, a clamping device may be mounted on the housing, for example, on a turntable. A tool may be connected to the clamping device, for example, a drill. Thus the clamping device and tool may be so located on the housing itself or the turntable that it may be used to operate on a workpiece, for example, to drill holes. It is a particular advantage of this embodiment of the invention that a tool may be used to perform operations on awkwardly located workpieces, for example, the structural members of buildings, reducing the physical strain on the operator.

The clamping device according to the invention may also be used as a lifting device for objects having surfaces of various roughness or irregularity and porosities. For example, it may be used to lift objects of metal or even concrete where the surface is not smooth and the concrete may have a relatively substantial porosity.

Turning to the accompanying drawings, numeral 1 indicates an assembly according to the invention, a clamping device 2 is provided with a vacuum source housing 3 to which is attached a handle 4 to position the assembly. At the other end of clamping device 2 is a turntable 5 used to locate a generally L-shaped supporting arm 6 having an upright portion 7 and a horizontal portion 8. At one end of horizontal portion 8 is a plate means 9 normally used to provide a surface against which a tool (in the present case a drill; see below) may be worked. A hole 10 is indicated generally in the centre of plate 9; the hole actually penetrating the end of horizontal portion 8. A movable locating means 11 is positioned on upright portion 7 and is used to support and locate drill 12.

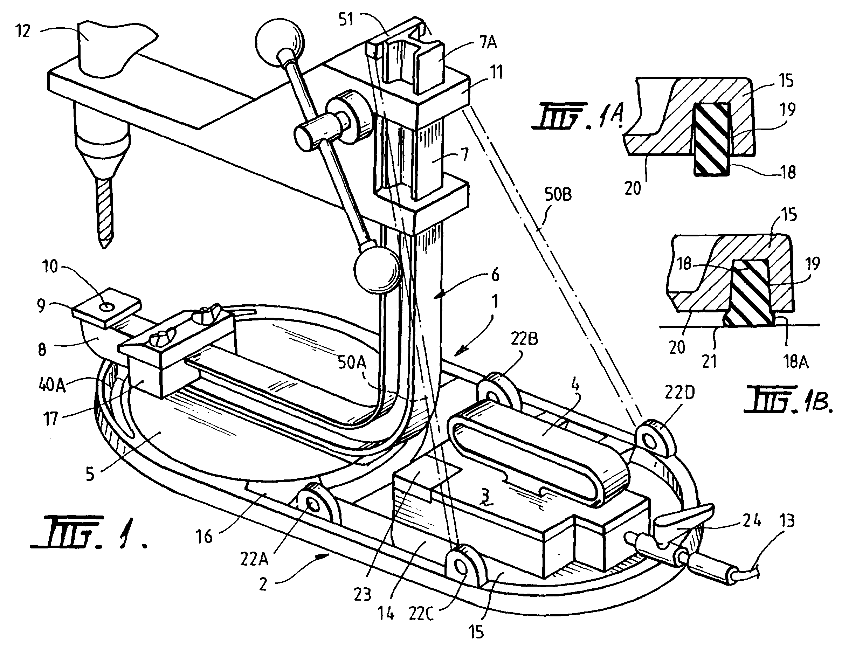

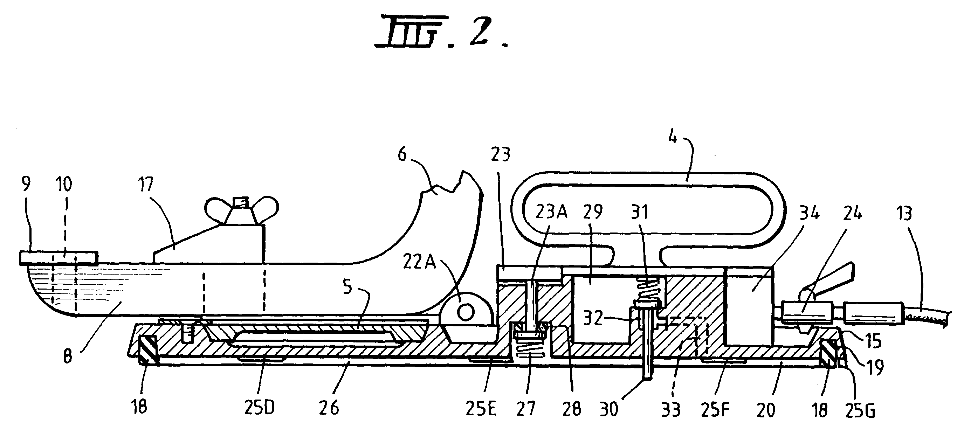

Considering Figure 1 in more detail, an air-supply (or suction) hose 13 is shown connected to housing 3. Clamping device 2 has a base portion 14 around the perimeter of which is located an upwardly extending rim 15, the purpose of which will be explained. A locking means 16 is located adjacent the perimeter of turntable 5 to lock the turntable in position. (Another locking means is provided in a corresponding position on the other side of the turntable). A boss means indicated generally by numeral 17 is attached to turntable 5 (in the present case shown as being adjacent to the end of clamping device 2 distal from housing 3) and is adapted to locate and hold in position supporting arm 6.

Two lifting lugs 22A and 22B respectively are shown positioned towards the sides of clamping device 2 on top of rim 15. These lugs may be used to attach a safety line or harness. Numeral 23 indicates a quick release means to allow air into the suction portion of clamping device 2. Numeral 24 indicates an inlet-tap for compressed air or an inert gas or to shut off a suction means.

Two more lugs 22C and 22D respectively are located towards the sides of clamping device 2 on top of rim 15 and near that end of the clamping device adjacent the vacuum source. A first strut 50A extends from lug 22C to pad 51 positioned behind top 7A of upright portion 7 of supporting arm 6. A second strut 50B extends from lug 22D to pad 51, both struts being included for extra strength and stability of assembly 1.

Turning now to Figures 1A and 1B, upwardly extending rim 15 houses lower circumferential groove 19 which in turn houses compressible seal 18. Groove 19 is shown as very slightly tapered to grip seal 18. Fig 1A shows seal 18 in its inoperative condition whereas Fig 1B shows seal 18 squashed into groove 19 with bulging portion 18A squashed outwards and into contact with vacuum chamber base 20 and a surface 21.

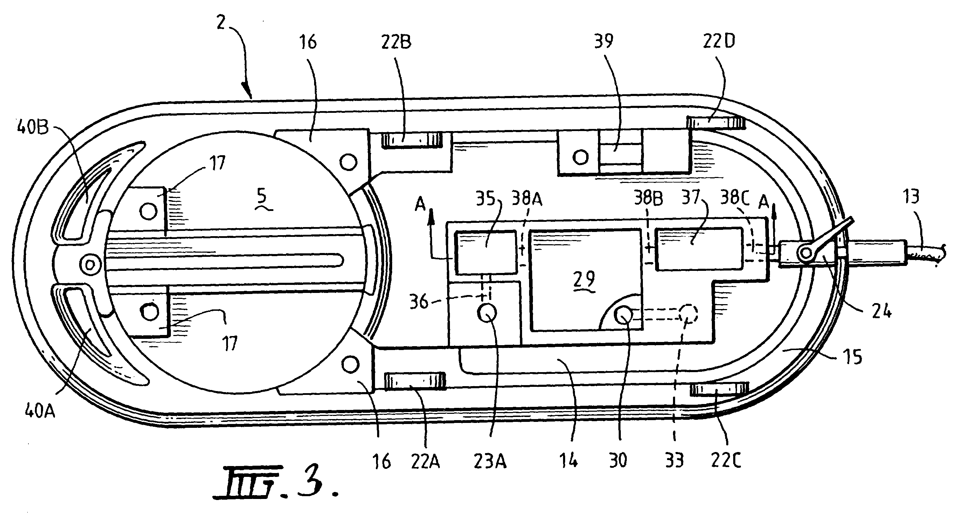

Turning to Figure 2, like numerals indicate like integers.

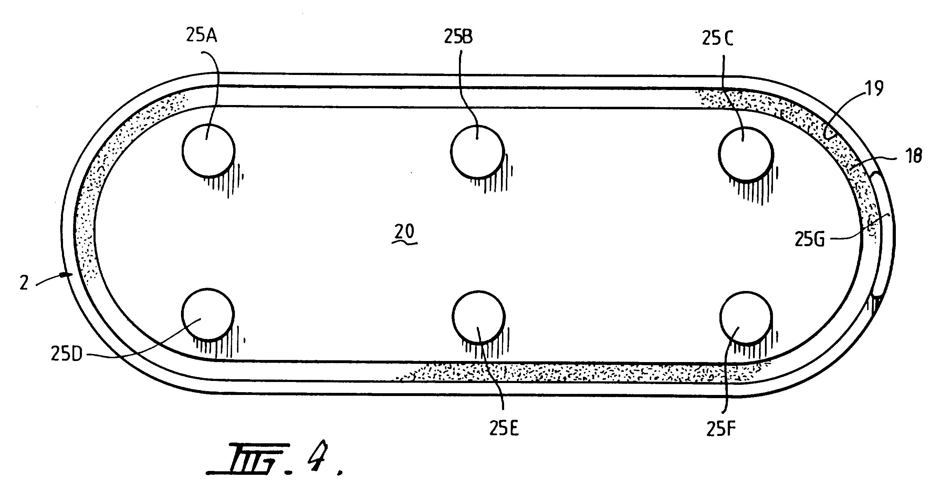

Numeral 23A indicates a valve means forming part of quick release means 23 and which operates as explained below. Numeral 25D indicates a downward protrusion from base 20. (Three protrusions are shown; see also Fig 4.) A downward, peripheral protrusion 25G is indicated below rim 15 adjacent the inlet for supply hose 13. A vacuum chamber 26 having an open bottom and a roof formed by base 20 is also shown.

Returning to the detail of quick release means 23, valve means 23A is compressed by a spring 27 upwards against O-ring 28 which normally prevents entrance of air into the vacuum chamber 26 when in use.

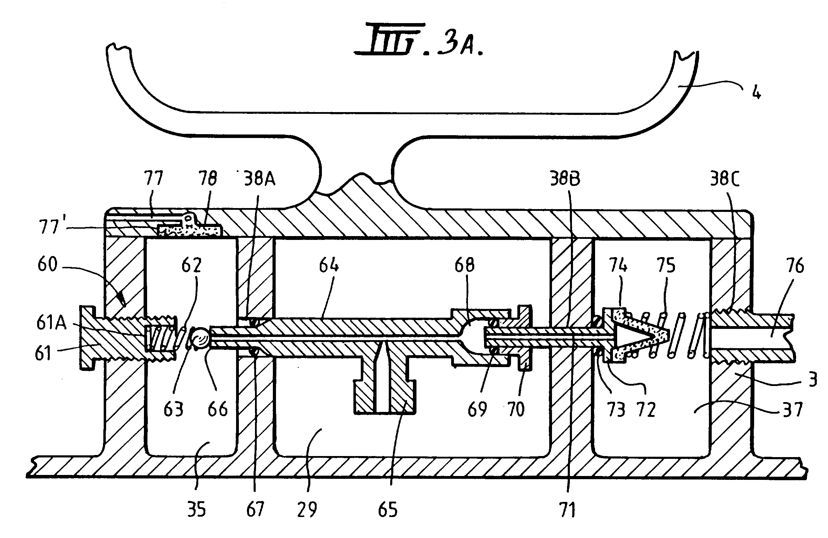

Numeral 29 indicates a vacuum cavity housing a venturi device (details of which are shown in Figure 3A). Valve 30 is forced downwards by spring 31 to seal entrance 32 leading to channel 33 which exits into vacuum chamber 26 thus producing a vacuum therein. In the inoperative state of clamping device 2, the stem of valve 32 protrudes below base 20. Numeral 34, indicating an unhatched portion Fig 2, is merely a cutaway portion of housing 2, as can be seen from Fig 1.

With regard to Fig 3, numeral 35 indicates an air silencer chamber leading by conduit 36 to valve means 23A whereby compressed air may be diverted into the vacuum chamber 26 to release clamping means 2. Numerals 38A, 38B and 38C indicate conduits between silencer chamber 35 and vacuum chamber 29; vacuum chamber 29 and air filter chamber 37; and air filter chamber 37 and tap 24 respectively. In the case where air or an inert gas is used to create a vacuum, the air or gas exhausts from air silencer chamber 35. A simple vacuum indicator connected to vacuum chamber 26 is indicated by numeral 39. Numerals 40A and 40B indicate two depressions formed in the principal portion of the casting comprising clamping device 2 to decrease weight.

Figure 3A provides detail of mechanism as viewed in cross-section along line A--A shown in Figure 3. Numeral 60 indicates a check valve comprising an adjustable body portion 61 which is provided with a hollowed end portion 61A and extends into silencer chamber 35. A first spiral spring means 62 fits into hollowed end portion 61A and bears upon sealing means 63. A venturi device 64 provided with an inner longitudinal hole, and a side body 65, provided with a narrowing venturi hole, extends between silencer chamber 35 and vacuum chamber 29. Sealing means 63 bears against end 66 of venturi device 64, in one operative position. A first O-ring 67 located in conduit 38A seals silencer chamber 35 from vacuum chamber 29.

The end of venturi device 64 distal from end 66 is provided with an opened-out portion 68 into which is fitted a second O-ring 69 located adjacent a sleeve means 70. This sleeve means 70 locates a connecting means 71, provided with an inner longitudinal hole, within opened-out portion 68 and extends through conduit 38B to air filter chamber 37. The connecting means 71 ends in flanged portion 72. A third O-ring is located between flanged portion 71 and the adjacent wall of air filter chamber 37.

A generally conical first air filter means 74 bears against flanged portion 72. A second spiral spring means 75 bears against the inlet wall of air filter chamber 37, holding conical filter means 74 in position. An inlet 76 is indicated leading into air filter chamber 37.

An outlet 76 leads out of silencer chamber 35 and is provided with a concentric cavity 77 adjacent the silencer chamber. A second air filter means is located within cavity 77 and functions as a silencer.

Check valve 60 may be adjusted to a first operative position, in which air or gas is allowed to escape into the silencer chamber 35, and to a second operative position, in which a suction device removes air through inlet 76, air being prevented from entering the vacuum chamber 36 from silencer chamber 35.

Regarding Fig 4, an array of downward protrusions 25A to 25F inclusive is shown in the base 20 of vacuum chamber 26. The downward protrusion 25G, already described above, is also shown at the lower outward periphery of rim 15. These protrusions limit the contraction of seal 18, permit formation of a more effective vacuum and generally stabilise clamping device 2.

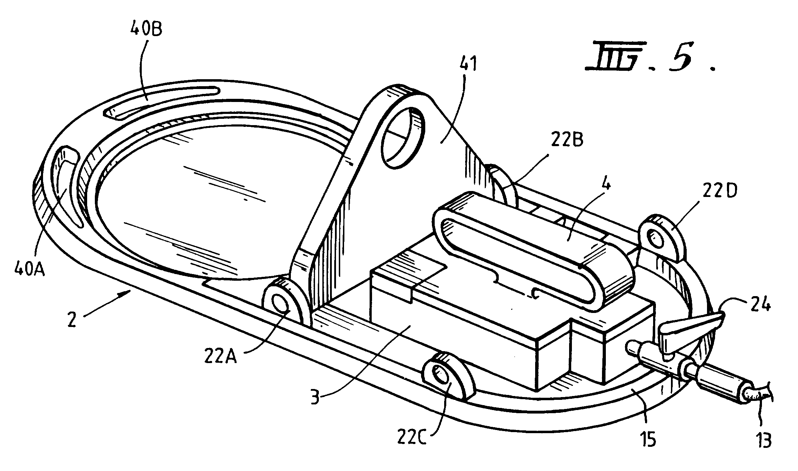

Fig 5 relates to a lifting device in which the turntable 5 and tool, for example, drill 22, have been eliminated, as have lateral lugs 22A and 22B. In place of these lateral lugs is shown a single transverse lifting lug 41. Other elements of this embodiment are similar to analogous elements in the embodiment of Figure 1 and the numerals have not been shown for the sake of clarity.

A vacuum filter (not shown) may be provided in channel 33; see Figure 2. This vacuum filter is conveniently made from sintered metal.

## Claims

1. A clamping device for temporarily attaching a tool to a surface of an article comprising :
(a) a base plate (14) having a lower surface (20) ;
(b) a groove (19) formed in the lower surface (20) and extending around the periphery (15) of the base plate (14), the groove (19) being defined by a bottom face, an inwardly facing side face and an outwardly facing side face, the side faces each extending from the bottom face to the lower surface (20) of the base plate (14) ;
(c) a compressible seal (18) having side faces located in the groove (19) and protruding externally therefrom, the lower surface (20) and compressible seal (18) defining a vacuum chamber (26) together with the article surface (21) when the base plate (14) is pressed toward the article surface (21) in use of the clamping device ; said compressible seal (18) being dimensioned relative to the groove (19) so that, and when sealing the article surface (21), the seal (18) deforms laterally within the groove ;
(d) a means (13) to supply a vacuum to the vacuum chamber (26) ; and
(e) characterised in that the lateral deformation of the seal within the groove is such that the seal engages against both the side faces, and also deforms laterally externally of the groove (19) to engage against the lower surface (20) immediately adjacent the groove (19), deformation of the seal (18) improving its airtight qualities and restricting the seal (18) against inward and outward lateral movement relative to the base plate (14) thereby stabilising the base plate (14) on the article.

2. A clamping device as claimed in claim 1, characterised in that the base plate (14) is provided with a degree of flexibility such that its lower surface (20) may be adjusted to adhere to an irregular surface (21).

3. A clamping device as claimed in claim 1 or claim 2, characterised in that at least one protrusion (25) is provided on the lower surface (20) of the base plate (14), the protrusion (25) projecting a distance from the lower surface (20), which distance is less than a distance the compressible seal (18) protrudes from the groove (19) when undeformed, the protrusion (25) engaging the article surface (21) upon deformation of the compressible seal (18) to thereby limit the extent of seal deformation and further stabilise the base plate (14) on the article.

4. A clamping device as claimed in any one of claims 1 to 3, characterised in that the seal (18) may move to a substantial degree from outside to the inside of the groove (19) to assist in conforming the seal (18) to roughnesses on the surface (21) of the article or workpiece to be grasped or worked upon.

5. A clamping device as claimed in any one of claims 1 to 4, characterised in that the seal (18) is adhered to the bottom of the groove (19).

6. A clamping device as claimed in any one of claims 1 to 5, characterised in that a vacuum generating device is provided in combination with the remainder of the clamping device (2).

7. A clamping device as claimed in any one of claims 1 to 5, characterised in that a separate source of vacuum is provided.

8. A clamping device as claimed in any one of claims 1 to 7, characterised in that a tool (12) is attached to the base plate (14), the tool (12) being so located that it may be operated to perform work operations on an article or workpiece.

9. A clamping device as claimed in any one of claims 1 to 8, characterised in that the groove (19) tapers away from the lower surface of the base plate (14) to grip the compressible seal (18)

## Patentansprüche

1. Klemmvorrichtung zur vorübergehenden Befestigung eines Werkzeugs an einer Oberfläche eines Gegenstandes, die folgendes aufweist:
a) eine Grundplatte (14) mit einer unteren Oberfläche (20);
b) eine Nut (19), die in der unteren Oberfläche (20) gebildet ist und um den Umfang (15) der Grundplatte (14) verläuft, wobei die Nut (19) durch eine Bodenfläche, eine nach innen gewandte Seitenfläche und eine nach außen gewandte Seitenfläche gebildet ist, wobei sich die Seitenflächen jeweils von der Bodenfläche zu der unteren Oberfläche (20) der Grundplatte (14) erstrecken;
c) eine zusammendrückbare Dichtung (18) mit in der Nut (19) angeordneten und aus dieser nach außen hervorstehenden Seitenflächen, wobei die untere Oberfläche (20) und die zusammendrückbare Dichtung (18) zusammen mit der Oberfläche (21) des Gegenstandes eine Vakuumkammer (26) bilden, wenn die Grundplatte (14) bei der Verwendung der Klemmvorrichtung in Richtung zu der Oberfläche (21) des Gegenstandes gedrückt wird; wobei die zusammendrückbare Dichtung (18) in bezug auf die Nut (19) so dimensioniert ist, daß die Dichtung (18) sich bei der Abdichtung der Oberfläche (21) des Gegenstandes seitlich in der Nut verformt;
d) eine Einrichtung (13), die an die Vakuumkammer (26) ein Vakuum anlegt; und
e) dadurch gekennzeichnet, daß sich die Dichtung in der Nut derart seitlich verformt, daß die Dichtung mit beiden Seitenflächen in Anlage gelangt und sich auch außerhalb der Nut (19) seitlich verformt, um mit der unteren Oberfläche (20) unmittelbar angrenzend an die Nut (19) in Anlage zu gelangen, wobei durch die Verformung der Dichtung (18) deren Luftdichtheit verbessert und die seitliche Bewegung der Dichtung (18) nach innen und nach außen relativ zu der Grundplatte (14) eingeschränkt wird, wodurch die Grundplatte (14) auf dem Gegenstand stabilisiert wird.

2. Klemmvorrichtung nach Anspruch 1, dadurch gekennzeichnet, daß die Grundplatte (14) eine derartige Flexibilität aufweist, daß ihre untere Oberfläche (20) so eingestellt werden kann, daß sie an einer unregelmäßigen Oberfläche (21) haftet.

3. Klemmvorrichtung nach Anspruch 1 oder Anspruch 2, dadurch gekennzeichnet, daß an der unteren Oberfläche (20) der Grundplatte (14) wenigstens ein Vorsprung (25) vorgesehen ist, der von der unteren Oberfläche (20) hervorsteht, wobei der Vorsprung (25) weniger weit hervorsteht als die zusammendrückbare Dichtung (18) im unverformten Zustand aus der Nut (19) hervorsteht, wobei der Vorsprung (25) bei Verformung der zusammendrückbaren Dichtung (18) an der Oberfläche (21) des Gegenstandes angreift, wodurch der Grad der Verformung der Dichtung begrenzt und die Grundplatte (14) auf dem Gegenstand weiter stabilisiert wird.

4. Klemmvorrichtung nach einem der Ansprüche 1 bis 3, dadurch gekennzeichnet, daß sich die Dichtung (18) in einem erheblichen Maße von außen in das Innere der Nut (19) bewegen kann, um die Anpassung der Dichtung (18) an rauhe Stellen auf der Oberfläche (21) des zu ergreifenden oder zu bearbeitenden Gegenstands oder Werkstücks zu unterstützen.

5. Klemmvorrichtung nach einem der Ansprüche 1 bis 4, dadurch gekennzeichnet, daß die Dichtung (18) am Boden der Nut (19) haftet.

6. Klemmvorrichtung nach einem der Ansprüche 1 bis 5, dadurch gekennzeichnet, daß eine ein Vakuum erzeugende Vorrichtung mit dem Rest der Klemmvorrichtung (2) kombiniert ist.

7. Klemmvorrichtung nach einem der Ansprüche 1 bis 5, dadurch gekennzeichnet, daß eine getrennte Vakuumquelle vorgesehen ist.

8. Klemmvorrichtung nach einen der Ansprüche 1 bis 7, dadurch gekennzeichnet, daß an der Grundplatte (14) ein Werkzeug (12) befestigt ist, wobei das Werkzeug (12) so angebracht ist, daß es zur Ausführung von Arbeitsvorgängen an einem Gegenstand oder einem Werkstück betrieben werden kann.

9. Klemmvorrichtung nach einem der Ansprüche 1 bis 8, dadurch gekennzeichnet, daß die Nut (19) von der unteren Oberfläche der Grundplatte (14) aus konisch verläuft, um die zusammendrückbare Dichtung (18) zu greifen.

## Revendications

1. Dispositif de serrage pour attacher momentanément un outil à une surface d'un article, comprenant :
(a) une plaque de base (14) ayant une surface inférieure (20) ;
(b) une gorge (19) formée dans la surface inférieure (20) et s'étendant autour de la périphérie (15) de la plaque de base (14), la gorge (19) étant définie par une face de fond, une face latérale dirigée vers l'intérieur et une face latérale dirigée vers l'extérieur, les faces latérales s'étendant chacune depuis la face de fond vers la surface inférieure (20) de la plaque de base (14) ;
(c) un joint compressible (18) ayant des faces latérales situées dans la gorge (19) et faisant saillie à l'extérieur de celle-ci, la surface inférieure (20) et le joint compressible (18) définissant une chambre à vide (26) en coopération avec la surface (21) de l'article, lorsque la plaque de base (14) est pressée vers la surface (21) de l'article pendant l'utilisation du dispositif de serrage ; ledit joint compressible (18) étant dimensionné par rapport à la gorge (19) de telle sorte que, tandis qu'il forme une étanchéité vis-à-vis de la surface (21) de l'article, le joint (18) se déforme dans la direction latérale à l'intérieur de la gorge ;
(d) un moyen (13) d'alimentation en vide pour la chambre à vide (26) ; et
(e) caractérisé par le fait que la déformation latérale du joint à l'intérieur de la gorge est telle que le joint entre en prise avec les deux faces latérales, et se déforme également vers l'extérieur de la gorge (19) dans la direction latérale, de façon à entrer en prise avec la surface inférieure (20) au voisinage immédiat de la gorge (19), la déformation du joint (19) améliorant ses qualités d'étanchéité à l'air et limitant le déplacement latéral du joint (18) vers l'intérieur et vers l'extérieur par rapport à la plaque de base (14), ce qui stabilise la plaque de base (14) sur l'article.

2. Dispositif de serrage selon la revendication 1, caractérisé par le fait que la plaque de base (14) est dotée d'un degré de flexibilité, de telle sorte que sa surface inférieure (20) puisse être ajustée de façon à adhérer à une surface (21) irrégulière.

3. Dispositif de serrage selon la revendication 1 ou la revendication 2, caractérisé par le fait qu'au moins une partie saillante (25) est aménagée sur la surface inférieure (20) de la plaque de base (14), la partie saillante (25) faisant saillie d'une distance à partir de la surface inférieure (20), laquelle distance est inférieure à la distance sur laquelle le joint compressible (18) fait saillie de la gorge (19) lorsqu'il n'est pas déformé, la partie saillante (25) entrant en prise avec la surface (21) de l'article lors de la déformation du joint compressible (18), pour limiter ainsi l'étendue de la déformation du joint et en outre stabiliser la plaque de base (14) sur l'article.

4. Dispositif de serrage selon l'une quelconque des revendications 1 à 3, caractérisé par le fait que le joint (18) peut se déplacer à un degré substantiel de l'extérieur vers l'intérieur de la gorge (19) pour permettre au joint (18) d'épouser plus aisément les rugosités de la surface (21) de l'article ou de la pièce de travail à saisir ou à travailler.

5. Dispositif de serrage selon l'une quelconque des revendications 1 à 4, caractérisé par le fait que le joint (18) est collé au fond de la gorge (19).

6. Dispositif de serrage selon l'une quelconque des revendications 1 à 5, caractérisé par le fait qu'il est prévu un dispositif de production de vide en combinaison avec le restant du dispositif de serrage (2).

7. Dispositif de serrage selon l'une quelconque des revendications 1 à 5, caractérisé par le fait qu'il est prévu une source de vide distincte.

8. Dispositif de serrage selon l'une quelconque des revendications 1 à 7, caractérisé par le fait qu'un outil (12) est attaché à la plaque de base (14), l'outil (12) étant placé de telle sorte qu'il puisse être actionné pour effectuer des opérations de travail sur un article ou une pièce de travail.

9. Dispositif de serrage selon l'une quelconque des revendications 1 à 8, caractérisé par le fait que la gorge (19) s'effile à partir de la surface inférieure de la plaque de base (14) de façon à agripper le joint compressible (18).
